# EUROPÄISCHE PATENTSCHRIFT

(11) **EP 1 566 352 B1**
(45) Veröffentlichungstag und Bekanntmachung des Hinweises auf die Patenterteilung: **19.09.2007**
(21) Anmeldenummer: 05003279.6
(22) Anmeldetag: 16.02.2005
(51) Int. Cl.: B65G 53/28, B65G 53/52, B05B 7/14

(54) **Pulverförderpumpe und zugehöriges Betriebsverfahren**
Feed pump for powder and its method of operation
Pompe d'alimentation pour matière poudreuse et son procédé d'opération

(30) Priorität: 18.02.2004 DE 102004007967
(43) Veröffentlichungstag der Anmeldung: 24.08.2005
(73) Patentinhaber: Dürr Systems GmbH, 70435 Stuttgart (DE)
(72) Erfinder: Herre, Frank, 71739 Oberriexingen (DE); Fritz, Hans-Georg, 73760 Ostfildern (DE); Dürr, Thomas, 71732 Tamm (DE)
(74) Vertreter: Beier, Ralph

(56) Entgegenhaltungen:
- WO-A-82/00349
- WO-A-03/029762
- CH-A5- 676 112

## Beschreibung

Die Erfindung betrifft ein Betriebsverfahren für eine Pulverförderpumpe und eine entsprechend ausgebildete Pulverförderpumpe zur Ausführung des erfindungsgemäßen Betriebsverfahrens.

In Pulverbeschichtungsanlagen wurde zur Förderung des als Beschichtungsmaterial dienenden Pulvers früher das sogenannte Dünnstromverfahren verwendet, bei dem das Pulver im fluidisierten Zustand in einem Luftstrom durch schlauchförmige Förderleitungen zu dem Applikationsgerät (z.B. Sprühpistole oder Rotationszerstäuber) gefördert wurde. Der Begriff Dünnstromverfahren rührt daher, dass der Pulveranteil in dem geförderten Pulver-Luft-Gemisch relativ gering ist, so dass die schlauchförmigen Förderleitungen einen entsprechend großen Querschnitt aufweisen mussten, um die gewünschte Pulvermenge zu fördern.

Aus diesem Grund wurde bereits die sogenannte Pulverdichtstromförderung (PDF) vorgeschlagen, die einen größeren Pulveranteil in dem geförderten Pulver-Luft-Gemisch aufweist. Die eigentliche Pulverförderung kann hierbei durch eine auch als PDF-Pumpe bezeichnete Pulverförderpumpe erfolgen, die eine Förderkammer mit einem Einlass und einem Auslass aufweist, wobei über den Einlass Pulver in die Förderkammer eingesaugt und anschließend über den Auslass ausgestoßen wird, um zu einem Applikationsgerät (z.B. Sprühpistole oder Rotationszerstäuber) zu gelangen. Zur Befüllung der Förderkammer wird zunächst der Auslass der Förderkammer geschlossen, während der Einlass der Förderkammer geöffnet wird, um Pulver aus einem Pulverbehälter ansaugen zu können. Anschließend wird dann in der Förderkammer ein Unterdruck erzeugt, indem Luft über ein Filterelement aus der Förderkammer abgesaugt wird, wobei das Filterelement luftdurchlässig, aber pulverundurchlässig ist, so dass das in der Förderkammer befindliche Pulver nicht abgesaugt wird. Nach einer ausreichenden Befüllung der Förderkammer wird dann die Absaugung beendet und das Einlassventil geschlossen. Zum Ausstoßen des in der Förderkammer befindlichen Pulvers wird dann der Auslass geöffnet und über das Filterelement Druckluft in die Förderkammer eingeblasen, wodurch das Pulver aus der Förderkammer ausgestoßen wird. Durch einen zyklischen Betrieb der vorstehend beschriebenen Einsaug- und Ausstoßphasen wird Pulver von dem Pulverbehälter zu dem Applikationsgerät gefördert. Die Förderkammer kann hierbei aus einem Schlauch- oder Rohrabschnitt bestehen, dessen hohlzylindrische Wandung gasdurchlässig, aber pulverundurchlässig ist und damit das Filterelement bildet, wobei der Einlass zu der Förderkammer durch ein Einlassventil verschließbar ist, während der Auslass aus der Förderkammer durch ein Auslassventil verschlossen werden kann.

Nachteilig an dieser bekannten Pulverförderpumpe für die Pulverdichtstromförderung (PDF) ist die unbefriedigende Dosiergenauigkeit.

Aus WO 03/029762 A1 ist eine gattungsgemäße Pulverförderpumpe bekannt. Nachteilig an dieser bekannten Pulverförderpumpe ist jedoch die Tatsache, dass Pulverteilchen in die Absaugleitung gelangen können.

Ferner ist zum Stand der Technik auf CH 676 112 A5 und WO 82/00349 A1 hinzuweisen.

Der Erfindung liegt deshalb die Aufgabe zugrunde, die Dosiergenauigkeit bei der vorstehend beschriebenen Pulverförderpumpe zu verbessern.

Diese Aufgabe wird durch ein Betriebsverfahren gemäß Anspruch 1 und eine zur Ausführung des erfindungsgemäßen Betriebsverfahrens geeignete Pulverförderpumpe gemäß Anspruch 10 gelöst.

Die Erfindung beruht auf der Erkenntnis, dass die unbefriedigende Dosiergenauigkeit der bekannten Pulverförderpumpe daher rührt, dass der Unterdruckaufbau in der Förderkammer Schwankungen unterliegt, die zu entsprechenden Schwankungen der eingesaugten und anschließend ausgestoßenen Pulvermenge führen.

Die Erfindung umfasst deshalb die allgemeine technische Lehre, den Unterdruck in der Förderkammer zumindest teilweise aufzubauen, bevor der Einlass der Förderkammer geöffnet wird. Der Einlass in die Förderkammer wird also erst geöffnet, wenn sich in der Förderkammer bereits ein Unterdruck aufgebaut hat. Dies bietet den Vorteil, dass Schwankungen des Unterdruckaufbaus in der Förderkammer einen geringeren Einfluss auf die Dosiergenauigkeit haben. Die erfindungsgemäße Pulverförderpumpe weist deshalb ein Einlassventil und ein Absaugventil auf, die unabhängig voneinander steuerbar sind, um vor dem Öffnen des Einlassventils zunächst das Absaugventil öffnen zu können, damit ein Unterdruck in der Förderkammer aufgebaut wird.

Hierbei wird die Erzeugung des Unterdrucks in der Förderkammer sogar beendet, bevor der Einlass der Förderkammer geöffnet wird. Die Phase der Unterdruckerzeugung und die Einsaugphase weisen also vorzugsweise keine zeitliche Überlappung auf. Dies bietet den Vorteil, dass beim Absaugen von Luft aus der Förderkammer aufgrund des dann geschlossenen Einlasses kein Pulver abgesaugt werden kann, was unerwünscht wäre. Aus diesem Grund kann sogar auf ein Filterelement zur Luftabsaugung aus der Förderkammer verzichtet werden, wodurch sich mit einem gegebenen Apparateaufwand ein höherer Unterdruck in der Förderkammer erzeugen lässt. Vorzugsweise erfolgt jedoch auch im Rahmen der Erfindung die Absaugung aus der Förderkammer durch ein Filterelement, um die Absaugung von Restpulver zu verhindern, das sich möglicherweise noch in der Förderkammer befindet.

Der Einlass der Förderkammer wird vorzugsweise erst dann geöffnet, wenn sich in der Förderkammer ein vorgegebener Unterdruck aufgebaut hat. Dies bietet den Vorteil, dass zu Beginn der Einsaugphase definierte Druckverhältnisse herrschen, so dass sich die eingesaugte Pulvermenge leicht berechnen und steuern bzw. regeln lässt.

Hierzu kann der Unterdruck in der Förderkammer durch einen Drucksensor gemessen werden, wobei eine Steuereinheit das Absaugventil schließt und gleichzeitig oder mit einer Verzögerungszeit das Einlassventil öffnet, wenn der gemessene Unterdruck in der Förderkammer einen vorgegebenen Grenzwert erreicht hat.

Es ist jedoch alternativ auch möglich, dass in der Förderkammer vor dem Öffnen des Einlassventils ein vorgegebener Unterdruck aufgebaut wird, indem das Absaugventil entsprechend dem gewünschten Unterdruck für eine vorgegebene Zeitspanne geöffnet wird, wobei sich der funktionale Zusammenhang zwischen der Öffnungsdauer des Absaugventils und dem resultierenden Unterdruck durch Versuche ermitteln lässt.

Die Abgabe des in der Förderkammer befindlichen Pulvers durch den Auslass erfolgt vorzugsweise, indem das Pulver aus der Förderkammer ausgestoßen wird. Hierzu mündet vorzugsweise ein Überdruckanschluss in die Förderkammer, über den ein Fluid zum Ausstoßen des Pulvers in die Förderkammer eingeleitet werden kann, wobei der Überdruckanschluss durch ein Ausstoßventil verschließbar ist. Vorzugsweise ist das Ausstoßventil unabhängig von dem Einlassventil, dem Auslassventil und/oder dem Absaugventil steuerbar. Dies bietet den Vorteil, dass die Unterdruckerzeugungsphase, die Einsaugphase, die Auslassphase und die Ausstoßphase unabhängig voneinander steuerbar sind, um ein optimales Förderungsverhalten zu erreichen.

Im Gegensatz zu der eingangs beschriebenen bekannten PDF-Pumpe wird das Fluid (z.B. Druckluft) zum Ausstoßen des Pulvers aus der Förderkammer vorzugsweise unter Umgehung des Filterelements direkt in die Förderkammer eingeleitet. Dies bietet den Vorteil, dass der Druckaufbau in der Förderkammer beim Ausstoßen des Pulvers nicht durch das Filterelement behindert wird, wodurch die Förderkammer schneller entleert werden kann.

Darüber hinaus kann im Rahmen der Erfindung eine Reinigung der Förderkammer erfolgen, indem ein Reinigungsfluid (z.B. Druckluft) in die Förderkammer eingeleitet wird. Im Gegensatz zu der eingangs beschriebenen bekannten PDF-Pumpe wird das Reinigungsfluid hierbei vorzugsweise über das Filterelement und nicht direkt in die Förderkammer eingeleitet. Dies bietet den Vorteil eines langsameren Druckaufbaus in der Förderkammer während des Reinigungsbetriebs, wodurch die Gefahr eines Platzens des Förderschlauchs verringert wird. Es besteht jedoch im Rahmen der Erfindung alternativ auch die Möglichkeit, dass das Reinigungsfluid direkt unter Umgehung des Filterelements in die Förderkammer eingeleitet wird.

Vorzugsweise liegt die Dauer eines vollständigen Arbeitstaktes einschließlich Unterdruckerzeugungsphase, Einsaugphase und Ausstoßphase im Bereich von 200 ms bis 1 s, wobei beliebige Zwischenwerte möglich sind und ein Wert der Taktdauer von 500 ms besonders vorteilhaft ist.

Die Unterdruckerzeugungsphase, die Einsaugphase und die Ausstoßphase können unterschiedliche Längen aufweisen oder auch gleich lang sein, wobei Werte zwischen 50 ms und 200 ms oder beliebige Zwischenwerte innerhalb dieses Intervalls möglich sind. Hierbei hat sich eine Zeitdauer von 150 ms für die Unterdruckerzeugungsphase, die Einsaugphase und/oder die Ausstoßphase als vorteilhaft erwiesen. Die Erfindung ist jedoch nicht auf die vorstehend erwähnten Werte für die Dauer der Unterdruckerzeugungsphase, der Einsaugphase und der Ausstoßphase beschränkt, sondern grundsätzlich auch mit anderen Werten realisierbar.

Weiterhin ist zu erwähnen, dass zwischen der Unterdruckerzeugungsphase, der Einsaugphase und/oder der Ausstoßphase vorzugsweise Verzögerungszeiten liegen, die beispielsweise im Bereich von 20 ms bis 200 ms liegen können. Diese Verzögerungszeiten sollen sicherstellen, dass die jeweiligen Ventile nach einer entsprechenden Ansteuerung die gewünschte Ventilstellung erreicht haben. Die Erfindung ist jedoch hinsichtlich der Dauer der Verzögerungszeiten nicht auf die vorstehend beschriebenen Werte beschränkt, sondern grundsätzlich auch mit anderen Werten für die Verzögerungszeit realisierbar.

Schließlich ist zu erwähnen, dass die Erfindung nicht auf eine Pulverförderpumpe als Einzelteil beschränkt ist, sondern vielmehr auch eine Pulverbeschichtungsanlage mit einer derartigen Pulverförderpumpe umfasst.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: ein Fluidikdiagramm eines bevorzugten Ausführungsbeispiels einer Pulverbeschichtungsanlage mit einer erfindungsgemäßen Pulverförderpumpe sowie
- Figur 2: mehrere Zeitdiagramme zur Verdeutlichung des Öffnungs- und Schließverhaltens der einzelnen Ventile der erfindungsgemäßen Pulverförderpumpe aus Figur 1.

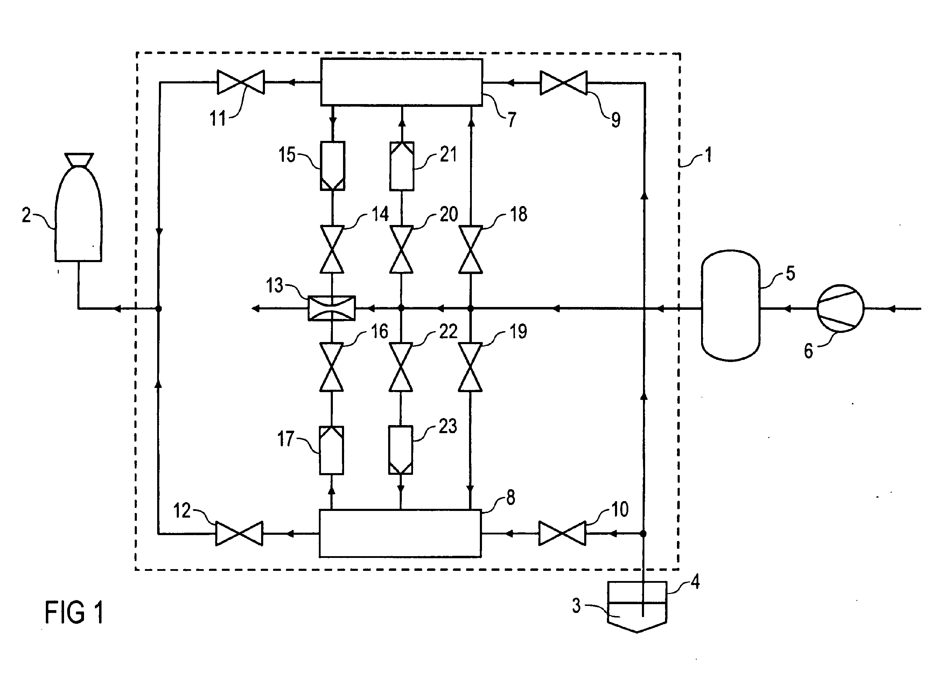

Das Fluidikdiagramm in Figur 1 zeigt eine Pulverbeschichtungsanlage mit einer erfindungsgemäßen Pulverförderpumpe 1 zur Pulverversorgung eines Rotationszerstäubers 2, wobei der Rotationszerstäuber 2 herkömmlich aufgebaut sein kann und deshalb im Folgenden nicht weiter beschrieben wird. Anstelle des Rotationszerstäubers 2 kann jedoch auch ein anderes Pulverapplikationsgerät eingesetzt werden, wie beispielsweise eine Sprühpistole.

Zur Aufnahme eines als Beschichtungsmittel dienenden Pulvers 3 ist die Pulverförderpumpe 1 eingangsseitig mit einem Pulverbehälter 4 verbunden, wobei der Pulverbehälter 4 ebenfalls herkömmlich aufgebaut sein kann und deshalb im Folgenden nicht näher beschrieben wird.

Darüber hinaus ist die Pulverförderpumpe 1 eingangsseitig mit einem Druckluftbehälter 5 verbunden, der von einer Druckluftpumpe 6 gespeist wird.

Zur Pulverförderung weist die Pulverförderpumpe 1 zwei parallel geschaltete Förderzweige mit jeweils einer Förderkammer 7, 8 auf.

Die beiden Förderkammern 7, 8 weisen jeweils einen Einlass auf, wobei die beiden Einlässe der Förderkammern 7, 8 über jeweils ein Einlassventil 9, 10 mit dem Pulverbehälter 4 verbunden sind. Bei geöffnetem Einlassventil 9, 10 kann also das Pulver 3 aus dem Pulverbehälter 4 in die Förderkammern 7, 8 eingesaugt werden, wie noch detailliert beschrieben wird.

Weiterhin weisen die Förderkammern 7, 8 jeweils einen Auslass auf, wobei die beiden Auslässe der Förderkammern 7, 8 über jeweils ein Auslassventil 11, 12 mit dem Rotationszerstäuber 2 verbunden sind. Bei geöffnetem Auslassventil 11, 12 kann also das in den Förderkammern 7, 8 befindliche Pulver 3 aus den Förderkammern 7, 8 ausgestoßen werden, wie ebenfalls noch detailliert beschrieben wird.

Die Einlassventile 9, 10 und die Auslassventile 11, 12 können hierbei als Quetschventile ausgebildet sein, die pneumatisch, hydraulisch oder elektrisch angetrieben werden können.

Zum Einsaugen des Pulvers 3 über die Einlassventile 9, 10 in die Förderkammern 7, 8 weist die Pulverförderpumpe 1 einen Unterdruckerzeuger 13 auf, der an sich herkömmlich aufgebaut ist. Der Unterdruckerzeuger 13 weist eine Injektordüse auf, die von dem Druckluftbehälter 5 mit Druckluft gespeist wird und nach dem Venturi-Prinzip einen Unterdruck an einem Unterdruckanschluss erzeugt.

Der Unterdruckanschluss des Unterdruckerzeugers 13 ist über ein Absaugventil 14 und ein Filterelement 15 mit der Förderkammer 7 verbunden und über ein Absaugventil 16 und ein Filterelement 17 an die Förderkammer 8 angeschlossen. Wenn das Absaugventil 14 geöffnet wird, saugt der Unterdruckerzeuger 13 über das Filterelement 15 Luft aus der Förderkammer 7 ab und erzeugt dort einen Unterdruck zum Einsaugen des Pulvers 3 aus dem Pulverbehälter 4. Entsprechend erzeugt der Unterdruckerzeuger 13 einen Unterdruck in der Förderkammer 8, wenn das Absaugventil 16 geöffnet ist.

Die beiden Filterelemente 15, 17 sind hierbei keine separaten Bauteile, sondern bestehen vielmehr aus der Wandung der hohlzylindrisch ausgeführten Förderkammern 7, 8, die luftdurchlässig, aber pulverundurchlässig ist.

Der Druckluftbehälter 5 ist jedoch nicht nur mit dem Unterdruckerzeuger 13 verbunden, um einen Unterdruck in den Förderkammern 7, 8 zu erzeugen, sondern dient auch zum Ausstoßen des Pulvers 3 aus den Förderkammern 7, 8. Hierzu ist der Druckluftbehälter 5 über ein Ausstoßventil 18 mit der Förderkammer 7 und über ein weiteres Ausstoßventil 19 mit der Förderkammer 8 verbunden. Im geöffneten Zustand der Ausstoßventile 18, 19 wird also Druckluft aus dem Druckluftbehälter 5 in die Förderkammern 7, 8 eingeblasen, wodurch das in den Förderkammern 7, 8 befindliche Pulver 3 aus den Förderkammern 7, 8 ausgestoßen wird, sofern die Auslassventile 11, 12 geöffnet sind. Von Bedeutung ist hierbei, dass die Auslassventile 18, 19 unter Umgehung der Filterelemente 15, 17 direkt in die Förderkammern 7, 8 münden. Dies bietet den Vorteil, dass der Druckaufbau in den Förderkammern 7, 8 beim Ausstoßen des Pulvers 3 aus den Förderkammern 7, 8 nicht durch den Strömungswiderstand der Filterelemente 15, 17 verlangsamt wird. Die direkte Zuführung der Druckluft in die Förderkammern 7, 8 ermöglicht also vorteilhaft einen schnelleren Druckaufbau und dadurch eine rasche Entleerung der Förderkammern 7, 8.

Die in dem Druckluftbehälter 5 gespeicherte Druckluft dient jedoch nicht nur zum Ausstoßen des in den Förderkammern 7, 8 befindlichen Pulvers 3, sondern auch zur Reinigung der Förderkammern 7, 8. Hierzu ist der Druckluftbehälter 5 über ein Reinigungsventil 20 und ein Filterelement 21 mit der Förderkammer 7 und in entsprechender Weise über ein Reinigungsventil 22 und ein Filterelement 23 mit der Förderkammer 8 verbunden. Der Druckluftbehälter 5 bläst also Druckluft zu Reinigungszwecken in die Förderkammer 7 ein, wenn das Reinigungsventil 20 geöffnet wird. Entsprechend wird Druckluft zu Reinigungszwecken in die Förderkammer 8 eingeblasen, wenn das Reinigungsventil 22 geöffnet ist.

Die beiden Filterelemente 21, 23 sind hierbei ebenfalls keine selbständigen Bauteile, sondern bestehen aus der Wandung der hohlzylindrischen Förderkammern 7, 8, die luftdurchlässig, aber pulverundurchlässig ist.

Die Zuführung der Reinigungsluft über die Filterelemente 21, 23 bietet den Vorteil, dass der Druckaufbau im Reinigungsbetrieb langsamer erfolgt, wodurch die Gefahr eines Platzens eines Förderschlauchs im Reinigungsbetrieb verringert wird.

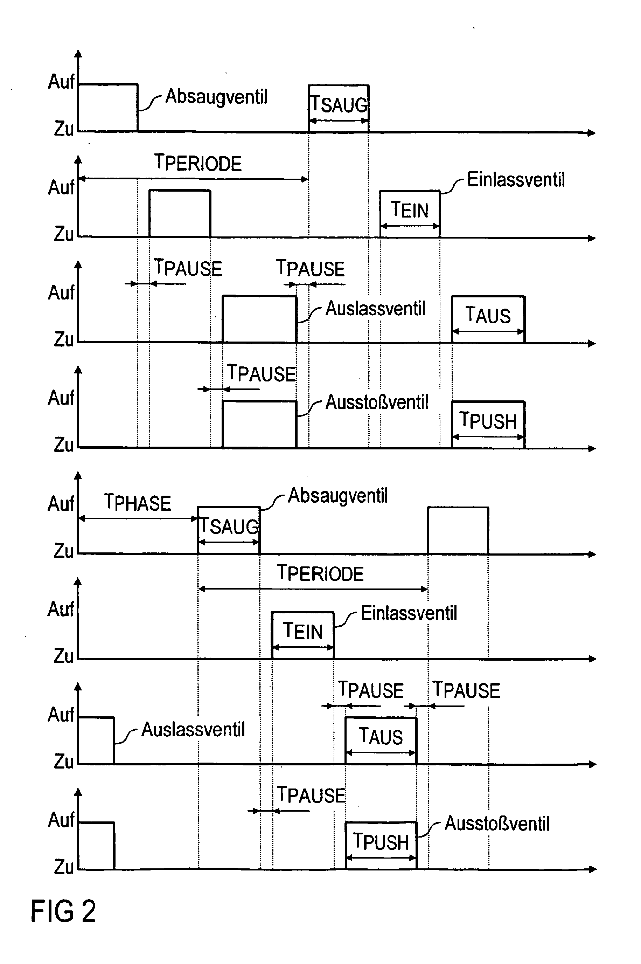

Im Folgenden wird nun anhand von Figur 2 das erfindungsgemäße Betriebsverfahren der Pulverförderpumpe 1 beschrieben. Die vier oberen Zeitdiagramme in Figur 2 zeigen hierbei von oben nach unten das zeitliche Öffnungsverhalten des Absaugventils 14, des Einlassventils 9, des Auslassventils 11 und des Ausstoßventils 18. Die unteren vier Zeitdiagramme in Figur 2 zeigen dagegen von oben nach unten das zeitliche Öffnungsverhalten des Absaugventils 17, des Einlassventils 10, des Auslassventils 12 und des Ausstoßventils 19.

Zu Beginn eines Arbeitstaktes wird zunächst das Absaugventil 14 geöffnet, während das Einlassventil 9, das Auslassventil 11 und das Ausstoßventil 18 geschlossen sind. Die Öffnung des Absaugventils 14 erfolgt hierbei für eine Dauer T_{SAUG}, die im Bereich von 50 ms und 200 ms liegen kann. Während dieser Unterdruckerzeugungsphase wird in der Förderkammer 7 ein definierter Unterdruck erzeugt, der später zum Einsaugen des Pulvers 3 in die Förderkammer 7 ausgenutzt wird, wie noch detailliert beschrieben wird.

Nach Ablauf der Unterdruckerzeugungsphase wird das Absaugventil 14 geschlossen, wobei das Einlassventil 9, das Auslassventil 11 und das Ausstoßventil 18 während einer vorgegebenen Verzögerungszeit T_{PAUSE} weiterhin geschlossen bleiben. Die Verzögerungszeit T_{PAUSE} liegt hierbei im Bereich von 10 ms bis 200 ms und stellt sicher, dass keine zeitlichen Überlappungen der einzelnen Phasen eines Arbeitstaktes auftreten.

Nach Ablauf der Verzögerungszeit T_{PAUSE} wird dann das Einlassventil 9 geöffnet, so dass der in der Förderkammer 7 zuvor aufgebaute Unterdruck das Pulver 3 aus dem Pulverbehälter 4 ansaugt, wodurch die Förderkammer 7 mit Pulver gefüllt wird. Das Einlassventil 9 wird hierbei für eine Dauer T_{EIN} geöffnet, die im Bereich zwischen 50 ms und 200 ms liegen kann. Nach Ablauf dieser Einlassphase wird das Einlassventil 9 geschlossen, wobei das Auslassventil 11, das Ausstoßventil 18 und das Absaugventil 14 während einer weiteren Verzögerungszeit zunächst ebenfalls geschlossen bleiben.

Nach Ablauf dieser Verzögerungszeit werden dann gleichzeitig das Auslassventil 11 und das Ausstoßventil 18 geöffnet, so dass Druckluft aus dem Druckluftbehälter 5 in die Förderkammer 7 eingeblasen wird, wodurch das in der Förderkammer 7 befindliche Pulver 3 über das Auslassventil 11 ausgestoßen wird. Die Öffnungsphase des Auslassventils 11 kann hierbei eine Dauer T_{AUS} haben, die im Bereich von 50 ms bis 200 ms liegt. Auch die Öffnungsphase des Ausstoßventils 18 kann eine Dauer T_{PUSH} haben, die im Bereich von 50 ms bis 200 ms liegt.

Nach dem Ablauf der Auslass- und Ausstoßphase werden dann das Auslassventil 11 und das Ausstoßventil 18 geschlossen, wobei das Einlassventil 9 und das Absaugventil 14 für eine Verzögerungszeit ebenfalls geschlossen bleiben. Nach Ablauf dieser Verzögerungszeit wird der vorstehend beschriebene Arbeitstakt zyklisch wiederholt, wobei ein Takt eine Periodendauer T_{PERIODE} aufweist, die beispielsweise 500 ms beträgt.

Das Einlassventil 10, das Auslassventil 12, das Ausstoßventil 19 und das Absaugventil 16 werden in gleicher Weise angesteuert, wobei jedoch eine Phasenverschiebung T_{PHASE} vorgesehen ist, die im Bereich von 250 ms liegen kann.

Vorteilhaft an der fehlenden Zeitlichen Überlappung der Unterdruckerzeugungsphase und der Einsaugphase ist die Tatsache, dass zu Beginn der Einsaugphase bereits ein definierter Unterdruck in der Förderkammer 7 bzw. 8 hergestellt wurde, so dass die Fördermenge genau vorbestimmt werden kann.

Die direkte Verbindung der Ausstoßventile 18, 19 mit den Förderkammern 7, 8 unter Umgehung der Filterelemente 15, 17, 21, 23 bietet den Vorteil, dass der Druckaufbau durch die Filterelemente 15, 17, 21, 23 nicht behindert wird, was eine schnellere Entleerung der Förderkammern 7, 8 ermöglicht.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Betriebsverfahren für eine Pulverförderpumpe (1), die eine Förderkammer (7, 8) mit einem Einlass und einem Auslass aufweist,
mit den folgenden Schritten:
a) Verschließen des Auslasses der Förderkammer (7, 8),
b) Öffnen des Einlasses der Förderkammer (7, 8),
c) Erzeugung eines Unterdrucks in der Förderkammer (7, 8) zum Einsaugen eines Pulvers (3) durch den Einlass in die Förderkammer (7, 8),
d) Verschließen des Einlasses der Förderkammer (7, 8),
e) Öffnen des Auslasses der Förderkammer (7, 8),
f) Abgabe des in der Förderkammer (7, 8) befindlichen Pulvers (3) durch den Auslass,
g) wobei der Unterdruck in der Förderkammer (7, 8) aufgebaut wird, bevor der Einlass der Förderkammer (7, 8) geöffnet wird,
**dadurch gekennzeichnet, dass**
h) die Erzeugung des Unterdrucks in der Förderkammer (7, 8) beendet wird, bevor der Einlass der Förderkammer (7, 8) geöffnet wird.

2. Betriebsverfahren nach Anspruch 1, **dadurch gekennzeichnet, dass** der Einlass der Förderkammer (7, 8) erst geöffnet wird, wenn sich in der Förderkammer (7, 8) ein vorgegebener Unterdruck aufgebaut hat.

3. Betriebsverfahren nach einem der vorhergehenden Ansprüche, **dadurch gekennzeichnet, dass** der Unterdruck in der Förderkammer (7, 8) vor dem Öffnen des Einlasses während einer vorgegebenen Zeitspanne (T_{SAUG}) aufgebaut wird.

4. Betriebsverfahren nach einem der vorhergehenden Ansprüche, **dadurch gekennzeichnet, dass** der Unterdruck in der Förderkammer (7, 8) erzeugt wird, indem aus der Förderkammer (7, 8) über ein Filterelement (15, 17) abgesaugt wird.

5. Betriebsverfahren nach einem der vorhergehenden Ansprüche, **dadurch gekennzeichnet, dass** zum Ausstoßen des Pulvers (3) aus der Förderkammer (7, 8) ein Fluid in die Förderkammer (7, 8) eingeleitet wird.

6. Betriebsverfahren nach Anspruch 5, **dadurch gekennzeichnet, dass** das Fluid zum Ausstoßen des Pulvers (3) an dem Filterelement (15, 17, 21, 23) vorbei in die Förderkammer (7, 8) eingeleitet wird.

7. Betriebsverfahren nach einem der vorhergehenden Ansprüche, **dadurch gekennzeichnet, dass** das Fluid zum Ausstoßen des Pulvers (3) aus der Förderkammer (7, 8) über ein steuerbares Ausstoßventil (18, 19) in die Förderkammer (7, 8) eingeleitet wird.

8. Betriebsverfahren nach einem der Ansprüche 4 bis 7, **dadurch gekennzeichnet, dass** zur Reinigung der Förderkammer (7, 8) ein Reinigungsfluid in die Förderkammer (7, 8) eingeleitet wird, wobei die Einleitung des Reinigungsfluids über das Filterelement (21, 23) erfolgt.

9. Betriebsverfahren nach einem der vorhergehenden Ansprüche, **dadurch gekennzeichnet, dass** zwischen dem Schließen des Einlasses und dem Öffnen des Auslasses der Förderkammer (7, 8) eine vorgegebene Verzögerungszeit (T_{PAUSE}) liegt.

10. Pulverförderpumpe (1) zur Förderung eines Pulvers (3), insbesondere in einer Pulverbeschichtungsanlage, mit
a) einer Förderkammer (7, 8),
b) einem Einlass in die Förderkammer (7, 8) zur Zuführung des Pulvers (3), wobei der Einlass durch ein Einlassventil (9, 10) verschließbar ist,
c) einem Auslass aus der Förderkammer (7, 8) zur Abgabe des Pulvers (3) aus der Förderkammer (7, 8), wobei der Auslass durch ein Auslassventil (11, 129 verschließbar ist,
d) einem Unterdruckanschluss zur Erzeugung eines Unterdrucks in der Förderkammer (7, 8) zum Einsaugen des Pulvers (3) in die Förderkammer (7, 8), wobei der Unterdruckanschluss durch ein Absaugventil (14, 16) verschließbar ist, wobei das Absaugventil (14, 16) unabhängig von dem Einlassventil (9, 10) steuerbar ist, um vor dem Öffnen des Einlassventils (9, 10) zunächst einen Unterdruck in der Förderkammer (7, 8) aufzubauen, sowie mit
e) einer Steuereinheit,
**dadurch gekennzeichnet, dass**
f) die Steuereinheit das Absaugventil (14, 16) schließt und danach mit einer Verzögerungszeit das Einlassventil (9, 10) öffnet.

11. Pulverförderpumpe (1) nach Anspruch 10, **dadurch gekennzeichnet, dass** die Förderkammer (7, 8) zum Ausstoßen des Pulvers (3) aus der Förderkammer (7, 8) einen Überdruckanschluss aufweist, der durch ein Ausstoßventil (18, 19) verschließbar ist.

12. Pulverförderpumpe (1) nach Anspruch 11, **dadurch gekennzeichnet, dass** das Ausstoßventil (18, 19) unabhängig von dem Auslassventil (11, 12) steuerbar ist.

13. Pulverförderpumpe (1) nach einem der Ansprüche 10 bis 12, **dadurch gekennzeichnet, dass** der Unterdruckanschluss über ein Filterelement (15, 17) in die Förderkammer (7, 8) mündet, wobei das Filterelement (15, 17) für das Pulver (3) im Wesentlichen undurchlässig und im Wesentlichen gasdurchlässig ist.

14. Pulverförderpumpe (1) nach Anspruch 13, **dadurch gekennzeichnet, dass** der Überdruckanschluss an dem Filterelement (15, 17) vorbei in die Förderkammer (7, 8) mündet.

15. Pulverförderpumpe (1) nach Anspruch 13 oder 14, **gekennzeichnet durch** einen Reinigungsanschluss zur Reinigung der Förderkammer (7, 8), wobei der Reinigungsanschluss über ein Filterelement (21, 23) in die Förderkammer (7, 8) mündet.

16. Pulverförderpumpe (1) nach einem der Ansprüche 10 bis 15, **dadurch gekennzeichnet, dass** das Einlassventil (9, 10) und/oder das Auslassventil (11, 12) ein Quetschventil ist.

17. Pulverbeschichtungsanlage mit einer Pulverförderpumpe (1) nach einem der Ansprüche 10 bis 16.

## Claims

1. An operating method for a powder-feed pump (1), which has a feed chamber (7, 8) with an inlet and an outlet,
with the following steps:
a) closing the outlet of the feed chamber (7, 8),
b) opening the inlet of the feed chamber (7, 8),
c) generating a negative pressure in the feed chamber (7, 8) for suctioning in powder (3) through the inlet into the feed chamber (7, 8),
d)) closing the inlet of the feed chamber (7, 8),
e) opening the outlet of the feed chamber (7, 8),
f) releasing the powder (3) located in the feed chamber (7, 8) through the outlet,
g) whereby the negative pressure in the feed chamber (7, 8) is built-up before the input of the feed chamber (7, 8) is opened,
**characterised in that**
h) the generation of negative pressure in the feed chamber (7, 8) ends before the inlet of the feed chamber (7, 8) is opened.

2. An operating method according to Claim 1, **characterised in that** the inlet of the feed chamber (7, 8) is only opened when a predetermined negative pressure has been built up in the feed chamber (7, 8).

3. A operating method according to one of the preceding claims, **characterised in that** the negative pressure in the feed chamber (7, 8) is built up before the opening of the inlet during a predetermined time span (T_{SUCTION}).

4. An operating according to one of the preceding claims, **characterised in that** the negative pressure in the feed chamber (7, 8) is generated by exhaustion out of the feed chamber (7, 8) via a filter element (15, 17).

5. An operating method according to one of the preceding claims, **characterised in that** to the discharge the powder (3) from the feed chamber (7, 8), a fluid is fed into the feed chamber (7, 8).

6. An operating method according to Claim 5, **characterised in that** the fluid for the discharge of the powder (3) is fed into the feed chamber (7,8) past the filter element (15, 17,21,23).

7. An operating method according to one of the preceding claims, **characterised in that** the fluid for the discharge of the powder (3) out of the feed chamber (7, 8) is fed through a controllable discharge valve (18, 19) into the feed chamber (7, 8).

8. A method of operation according one of Claims 4 to 7, **characterised in that** to clean the feed chamber (7, 8), a cleaning fluid is fed into the feed chamber (7, 8), whereby the cleaning fluid is fed occurs through a filter element (21, 23).

9. An operating method of operation according to one of the preceding claims, **characterised in that** there is a predetermined delay time (T_{PAUSE}) between the closing of the inlet and the opening of the outlet of the feed chamber (7, 8).

10. A powder-feed pump (1) for conveying a powder (3), especially in a powder-coating system, with
a) a feed chamber (7, 8),
b) an inlet into the feed chamber (7, 8) for the supply of the powder (3), whereby the inlet is closable by an inlet valve (9, 10),
c) an outlet from the feed chamber (7, 8) for the release of the powder (3) from the feed chamber (7, 8), whereby the outlet can be closed by an outlet valve (11, 12),
d) a negative-pressure connection for generation of a negative pressure in the feed chamber (7, 8) for suctioning the powder (3) into the feed chamber (7, 8), whereby the negative pressure connection can be closed by a exhaust valve (14, 16), where the exhaust valve (14, 16) can be controlled independently from the inlet valve (9, 10), in order first to build up a negative pressure in the feed chamber (7, 8) before the inlet valve (9, 10) is opened, and with e) a control unit,
**characterised in that**
f) the control unit closes the exhaust valve (14, 16), and after that, with a delay time, it opens the inlet valve (9, 10).

11. A powder-feed pump (1) according to Claim 10, **characterised in that** the feed chamber (7, 8) for the discharge of the powder (3) from the feed chamber (7, 8) has an overpressure connection, which can be closed by a discharge valve (18, 19).

12. A powder-feed pump (1) according to Claim 11, **characterised in that** the discharge valve (18, 19) can be controlled independently from the outlet valve (11, 12).

13. powder-feed pump (1) according to one of Claims 10 to 12, **characterised in that** the negative-pressure connection opens into the feed chamber (7, 8) through a filter element (15, 17), whereby the filter element (15, 17) is essentially impermeable to the powder (3) and essentially permeable to gases.

14. A powder-feed pump (1) according to Claim 13, **characterised in that** the overpressure connection opens into the feed chamber (7, 8), past the filter element (15, 17).

15. A powder-feed pump (1) according to Claim 13 or 14, **characterised by** a cleaning connection for cleaning the feed chamber (7, 8), whereby the cleaning connection opens into the feed chamber (7, 8) through a filter element (21, 23).

16. A powder-feed pump (1) according to one of Claims 10 to 15, **characterised in that** the inlet valve (9, 10) and/or the outlet valve (11,12) is a pinch valve.

17. A powder-coating system with a powder-feed pump (1) according to one of claims 10 to 16.

## Revendications

1. Procédé de fonctionnement d'une pompe d'alimentation en poudre (1) qui présente une chambre de transport (7, 8) avec une entrée et une sortie, comprenant les étapes consistant à :
a) fermer la sortie de la chambre de transport (7, 8),
b) ouvrir l'entrée de la chambre de transport (7, 8),
c) générer une dépression dans la chambre de transport (7, 8) afin d'aspirer une poudre (3) par l'entrée de la chambre de transport (7, 8),
d) fermer l'entrée de la chambre de transport (7, 8),
e) ouvrir la sortie de la chambre de transport (7, 8),
f) délivrer la poudre (3) qui se trouve dans la chambre de transport (7, 8) par la sortie,
g) la dépression dans la chambre de transport (7, 8) étant établie avant l'ouverture de l'entrée de la chambre de transport (7, 8),
**caractérisé en ce que**
h) l'établissement de la dépression dans la chambre de transport (7, 8) est terminé avant l'ouverture de l'entrée de la chambre de transport (7, 8).

2. Procédé de fonctionnement selon la revendication 1, **caractérisé en ce que** l'entrée de la chambre de transport (7, 8) n'est ouverte que lorsqu'une dépression prédéfinie s'est établie dans la chambre de transport (7, 8).

3. Procédé de fonctionnement selon l'une des revendications précédentes, **caractérisé en ce que** la dépression est établie dans la chambre de transport (7, 8) pendant une durée (T_{SAUG}) prédéterminée avant l'ouverture de l'entrée.

4. Procédé de fonctionnement selon l'une des revendications précédentes, **caractérisé en ce que** la dépression dans la chambre de transport (7, 8) est établie par aspiration de la chambre de transport (7, 8) à travers un élément filtrant (15, 17).

5. Procédé de fonctionnement selon l'une des revendications précédentes, **caractérisé en ce qu'**un fluide est introduit dans la chambre de transport (7, 8) afin de chasser la poudre (3) hors de la chambre de transport (7, 8).

6. Procédé de fonctionnement selon la revendication 5, **caractérisé en ce que** le fluide utilisé pour chasser la poudre (3) est introduit dans la chambre de transport (7, 8) par le biais de l'élément filtrant (15, 17, 21, 23).

7. Procédé de fonctionnement selon l'une des revendications précédentes, **caractérisé en ce que** le fluide utilisé pour chasser la poudre (3) hors de la chambre de transport (7, 8) est introduit dans la chambre de transport (7, 8) par une vanne de chasse commandable (18, 19).

8. Procédé de fonctionnement selon l'une des revendications 4 à 7, **caractérisé en ce que**, pour nettoyer la chambre de transport (7, 8), un fluide de nettoyage est introduit dans la chambre de transport (7, 8), l'introduction du fluide de nettoyage se faisant par le biais de l'élément filtrant (21, 23).

9. Procédé de fonctionnement selon l'une des revendications précédentes, **caractérisé en ce qu'**un temps de retard (T_{PAUSE}) prédéfini est intercalé entre la fermeture de l'entrée et l'ouverture de la sortie de la chambre de transport (7, 8).

10. Pompe d'alimentation de poudre (1) pour alimenter une poudre (3), en particulier dans une installation de revêtement par poudrage, avec
a) une chambre de transport (7, 8),
b) une entrée de chambre de transport (7, 8) pour amener la poudre (3), l'entrée pouvant être fermée par une vanne d'entrée (9, 10),
c) une sortie de chambre de transport (7, 8) pour délivrer la poudre (3) hors de la chambre de transport (7, 8), la sortie pouvant être fermée par une vanne de sortie (11, 12),
d) un raccord de dépression pour générer une dépression dans la chambre de transport (7, 8) afin d'aspirer la poudre (3) dans la chambre de transport (7, 8), le raccord de dépression pouvant être fermé par une vanne d'aspiration (14, 16), la vanne d'aspiration (14, 16) pouvant être commandée indépendamment de la vanne d'entrée (9, 10), afin d'établir d'abord une dépression dans la chambre de transport (7, 8) avant l'ouverture de la vanne d'entrée (9, 10), ainsi que
e) un module de commande,
**caractérisée en ce que**
f) le module de commande ferme la vanne d'aspiration (14, 16) et ensuite, après un temps de retard, ouvre la vanne d'entrée (9, 10).

11. Pompe d'alimentation de poudre (1) selon la revendication 10, **caractérisée en ce que** la chambre de transport (7, 8) présente, pour chasser la poudre (3) hors de la chambre de transport (7, 8), un raccord de surpression qui peut être fermé par une vanne de chasse (18, 19).

12. Pompe d'alimentation de poudre (1) selon la revendication 11, **caractérisée en ce que** la vanne de chasse (18, 19) peut être commandée indépendamment de la vanne de sortie (11, 12).

13. Pompe d'alimentation de poudre (1) selon l'une des revendications 10 à 12, **caractérisée en ce que** le raccord de dépression débouche par le biais d'un élément filtrant (15, 17) dans la chambre de transport (7, 8), l'élément filtrant (15, 17) étant pratiquement imperméable à la poudre (3) et pratiquement perméable aux gaz.

14. Pompe d'alimentation de poudre (1) selon la revendication 13, **caractérisée en ce que** le raccord de surpression débouche dans la chambre de transport (7, 8) en passant par l'élément filtrant (15, 17).

15. Pompe d'alimentation de poudre (1) selon la revendication 13 ou la revendication 14, **caractérisée par** un raccord de nettoyage servant à nettoyer la chambre de transport (7, 8), le raccord de nettoyage débouchant dans la chambre de transport (7, 8) par le biais d'un élément filtrant (21, 23).

16. Pompe d'alimentation de poudre (1) selon l'une des revendications 10 à 15, **caractérisée en ce que** la vanne d'entrée (9, 10) et/ou la vanne de sortie (11, 12) est une vanne à manchon.

17. Installation de revêtement par poudrage avec une pompe d'alimentation de poudre (1) selon l'une des revendications 10 à 16.
